(19) Europäisches Patentamt
European Patent Office
Office européen des brevets

(11) **EP 0 920 994 B1**

(12) **EUROPÄISCHE PATENTSCHRIFT**

(45) Veröffentlichungstag und Bekanntmachung des Hinweises auf die Patenterteilung:
**20.11.2002 Patentblatt 2002/47**

(51) Int Cl.⁷: **B41F 33/00**

(21) Anmeldenummer: **98116288.6**

(22) Anmeldetag: **28.08.1998**

(54) **Verfahren zur Gewinnung von Farbmesswerten**

Method of determination of colour values

Procédé pour la détermination de valeurs de couleur

(84) Benannte Vertragsstaaten:
**BE CH DE FR GB IT LI NL**

(30) Priorität: **06.11.1997 DE 19749063**

(43) Veröffentlichungstag der Anmeldung:
**09.06.1999 Patentblatt 1999/23**

(73) Patentinhaber: **Heidelberger Druckmaschinen Aktiengesellschaft**
**69115 Heidelberg (DE)**

(72) Erfinder:
• **Ott, Hans**
**8105 Regensdorf (CH)**
• **Pfeiffer, Nikolaus**
**69118 Heidelberg (DE)**
• **Schneider, Manfred**
**74906 Bad Rappenau (DE)**

(74) Vertreter: **Pudimat, Roland et al**
**Heidelberger Druckmaschinen AG,**
**Kurfürsten-Anlage 52-60**
**69115 Heidelberg (DE)**

(56) Entgegenhaltungen:
**EP-A- 0 527 285          EP-A- 0 659 559**
**EP-B- 0 142 470          EP-B- 0 143 744**
**EP-B- 0 228 347          WO-A-95/00336**
**DE-A- 4 415 486**

**Beschreibung**

Die Erfindung betrifft ein Verfahren zur Gewinnung von für die Farbgebungsregelung einer Druckmaschine bestimmten Farbmesswerten aus einem von der Druckmaschine erzeugten Druckbild gemäss dem Oberbegriff des unabhängigen Anspruchs.

Die Regelung der Farbgebung bei modernen Druckmaschinen, insbesondere im Offset-Druck, erfolgt mit Vorteil farbabstandsgesteuert. Ein typisches farbabstandsgesteuertes Regelverfahren ist beispielsweise in der EP-B2-0 228 347 und in dem DE 195 15 499 C2 beschrieben. Bei diesem Verfahren wird ein mit der Druckmaschine gedruckter Druckbogen in einer Anzahl von Testbereichen bezüglich eines ausgewählten Farbkoordinatensystems farbmetrisch ausgemessen. Aus den dabei gewonnenen Farbkoordinaten werden die Farbabstandsvektoren zu auf dasselbe Farbkoordinatensystem bezogenen Soll-Farbkoordinaten berechnet. Diese Farbabstandsvektoren werden mit Hilfe von Farbwertgradienten in Schichtdickeänderungsvektoren umgerechnet, und die Regelung der Farbführung der Druckmaschine wird aufgrund der aus den Farbabstandsvektoren umgerechneten Schichtdickenänderungsvektoren vorgenommen. Als Testbereiche werden die Felder von mit dem eigentlichen Druckbild mitgedruckten Farbkontrollstreifen verwendet.

Inzwischen sind i.a. als Scanner bezeichnete Abtasteinrichtungen bekannt geworden, welche es gestatten, den gesamten Bildinhalt eines Druckbogens in einer grossen Zahl von relativ kleinen Bildelementen mit vertretbarem Aufwand und in sehr kurzer Zeit farbmetrisch oder spektralfotometrisch auszumessen. Diese Abtasteinrichtungen bieten die prinzipiellen messtechnischen Voraussetzungen, für die Regelung der Farbführung einer Druckmaschine nicht nur mitgedruckte Teststreifen zu verwenden, sondern die Farbinformationen aus allen Bildelementen des gesamten eigentlichen Druckbilds für diesen Zweck heranzuziehen.

Für die Berechnung der Eingangsgrössen der Regeleinrichtung der Farbgebungsorgane der Druckmaschine werden die Farbabstandsvektoren der abgetasteten Bildelemente des Druckbogens gegenüber den entsprechenden Bildelementen eines OK-Bogens oder einer anderen Referenz direkt beispielsweise nach den in der genannten EP-B2-0 228 347 beschriebenen Methoden ausgewertet. Diese direkte Auswertung der Farbabstandsvektoren als solchen ist zulässig, wenn nur die Felder von mit dem eigentlichen Druckbild mitgedruckten Farbkontrollstreifen oder nur einige wenige, speziell ausgewählte Testbereiche aus dem eigentlichen Druckbild als Testbereiche verwendet werden. Wenn jedoch der gesamte Bildinhalt, d.h. alle oder ein grosser Teil der Bildelemente des Druckbilds für die Auswertung herangezogen werden sollen, so versagt diese Vorgehensweise wegen der in den einzelnen Bildelementen normalerweise sehr unterschiedlichen Drucksituationen ganz oder sie führt zumindest zu Fehlregelungen. Die Farbabstandsvektoren der einzelnen Bildelemente können also bei der sog. Messung im Bild im allgemeinen nicht als solche der weiteren Verarbeitung zugrundegelegt werden.

In EP 142 470 B1 ist ein Verfahren zur Beurteilung der Druckqualität eines Druckerzeugnisses beschrieben, bei dem Bildelemente fotoelektrisch ausgemessen werden. Den Remissions-Istwerten der Bildelemente werden ein Empfindungsgewichtsfaktor und in Abhängigkeit von der Flächendeckung eines Bildelementes ein Volltongewichtungsfaktor zugeordnet. Die Abweichungen zwischen gemessenen Remissions-Istwerten und vorausberechneten Remissions-Sollwerten werden über einen oder mehrere ausgewählte Flächenbereiche des Druckerzeugnisses addiert.

Ausgehend von diesem Stand der Technik ist es eine Aufgabe der vorliegenden Erfindung, ein Verfahren der gattungsgemässen Art dahingehend zu verbessern, dass es auch bei der sog. Messung im Bild zu für die Farbgebungsregelung einer Druckmaschine geeigneten Farbmesswerten führt.

Die Lösung dieser der Erfindung zugrundeliegenden Aufgabe ergibt sich aus den im kennzeichnenden Teil des unabhängigen Anspruchs 1 beschriebenen Merkmalen. Besonders vorteilhafte Ausgestaltungen und Weiterbildungen sind Gegenstand der abhängigen Ansprüche.

Im folgenden wird die Erfindung anhand der Zeichnung näher erläutert, deren einzige Figur ein Prinzip-Schema der Steuerung bzw. Regelung einer Druckmaschine zeigt.

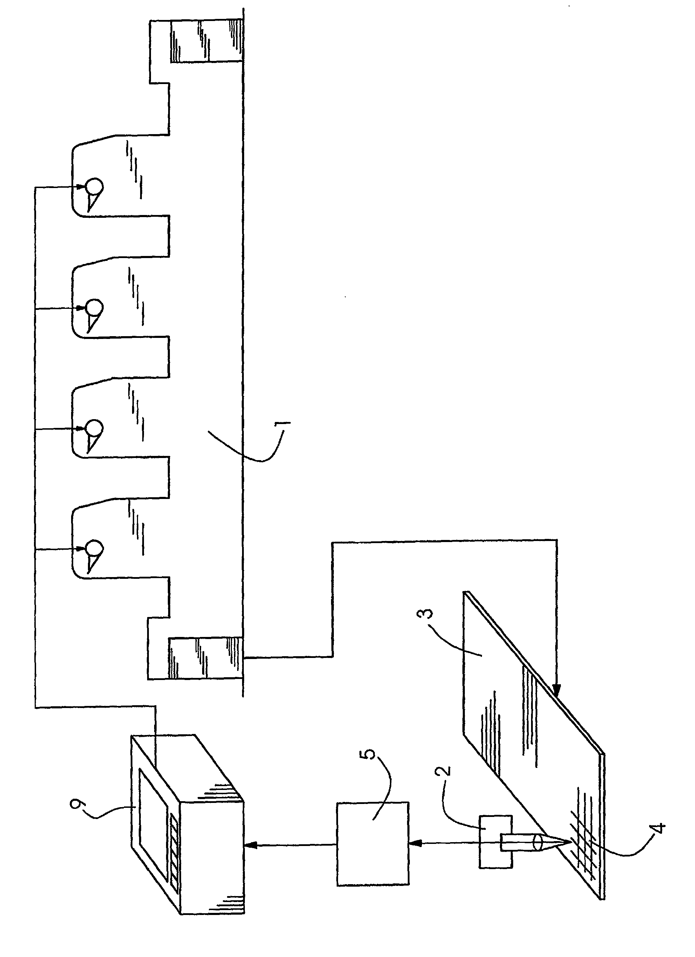

Gemäss Fig. 1 erzeugt eine Druckmaschine 1, insbesondere eine Mehrfarben-Offset-Druckmaschine, Druckbögen 3, welche das gewünschte Druckbild und ggf. zusätzlich

Gemäss Fig. 1 erzeugt eine Druckmaschine 1, insbesondere eine Mehrfarben-Offset-Druckmaschine, Druckbögen 3, welche das gewünschte Druckbild und ggf. zusätzlich Druckkontrollelemente aufweisen. Die Druckbögen 3 werden dem laufenden Druckprozess entnommen und einer spektralfotometrischen Abtasteinrichtung 2 zugeführt. Diese tastet die Druckbögen 3 im wesentlichen über die gesamte Oberfläche bildelementweise ab. Die Grösse der einzelnen Bildelemente 4 ist typisch etwa 2,5 mm x 2,5 mm entsprechend rund 130000 Bildelementen 4 bei einem Druckbogen 3 üblicher Dimensionen. Die von der Abtasteinrichtung erzeugten Abtastwerte - typischerweise spektrale Remissionswerte - werden in einer Auswerteeinrichtung 5 analysiert und zu Eingangsgrössen für eine der Druckmaschine 1 zugeordnete Steuereinrichtung 9 verarbeitet, welche ihrerseits die Farbgebungsorgane der Druckmaschine nach Massgabe dieser Eingangsgrössen steuert. Bei den Eingangsgrössen handelt es sich, zumindest im Falle einer Offset-Druckmaschine 1 typischerweise um zonale Schichtdickenänderungen für die einzelnen am Druck beteiligten Druckfarben. Die Bestimmung der genannten Eingangsgrössen bzw. Schichtdickenänderungen erfolgt durch Vergleich der Abtastwerte bzw. von daraus abgeleiteten Grössen, insbesondere Farbmesswerten (Farborten bzw. Farbvektoren) eines sogenannten OK-Bogens mit den entsprechenden Grössen eines dem laufenden Druckprozess entnommenen Druckbogens in dem Sinne, dass die durch die Eingangsgrössen bzw. Schichtdickenänderungen bewirkten Änderungen der Einstellungen der Farbgebungsorgane der Druckmaschine eine möglichst gute Angleichung des farblichen Eindrucks der laufend erzeugten Druckbögen an den OK-Bogen zur Folge haben. Zum Vergleich kann anstelle eines OK-Bogens auch eine andere Referenz herangezogen werden, beispielsweise etwa entsprechende Vorgabewerte oder entsprechende aus Druckvorstufen erhaltene Werte.

Die skizzierte Anordnung entspricht soweit im wesentlichen herkömmlichen, z.B. in DE-A 44 15 486 im Detail beschriebenen Anordnungen und Verfahren zur Farbgebungsregelung von Druckmaschinen 1 und bedarf deshalb für den Fachmann keiner näheren Erläuterung.

Aus den von der Abtasteinrichtung 2 erzeugten Remissionswerten des sichtbaren Spektralbereichs werden Farbwerte (Farbkoordinaten, Farbvektoren, Farborte) bezüglich eines gewählten Farbraums berechnet. Vorzugsweise wählt man dafür einen empfindungsmässig gleichabständigen Farbraum, typischerweise etwa den sog. L,a,b-Farbraum gemäss CIE (Commission Internationale de l'Eclairage). Die durch die Auswerteeinrichtung 5 erfolgende Berechnung der Farbwerte L,a,b aus den spektralen Remissionswerten des sichtbaren Spekralbereichs ist durch CIE genormt und bedarf deshalb keiner Erläuterung. Der Vollständigkeit halber sei erwähnt, dass die Ermittlung der Farbwerte L,a,b (oder entsprechender Werte eines anderen Farbraums) auch ohne spektrale Abtastung mittels geeigneter Farbmessgeräte erfolgen könnte.

Die nach der Abtastung eines Druckbogens 3 für die Bildelemente 4 vorliegenden Farbvektoren F = (L, a, b) bilden den Ausgangspunkt für die Berechnung der Eingangsgrössen für die Druckmaschinensteuereinrichtung 9. Diese Berechnungen erfolgen ebenfalls in der Auswerteeinrichtung 5.

Der Farbunterschied eines Bildelements 4 zu einem Bezugsbildelement 4 bzw. zum entsprechenden Bildelement 4 einer Referenz, typisch eines OK-Bogens 3 , oder zu einem anderen Bildelement 4 desselben Druckbogens 3 sei als Farbabstandsvektor $\Delta F$ bezeichnet, der sich nach der Beziehung

$$\Delta F = (\Delta L, \Delta a, \Delta b) = F_i - F_r = (L_i - L_r, a_i - a_r, b_i - b_r)$$

ergibt, worin die mit dem Index i versehenen Werte diejenigen des betrachteten Bildelements 4 und die mit dem Index r versehenen Werte die Komponenten des Farbvektors des Bezugsbildelements 4 bzw. des entsprechenden Bildelements 4 des OK-Bogens 3 bzw. des genannten anderen Bildelements 4 desselben Druckbogens 3 sind. Die Farbvektoren der Bildelemente 4 des OK-Bogens 3 oder einer anderen Referenz werden vielfach auch als Soll-Farbvektoren bezeichnet. Als Farbabstand $\Delta E$ zweier Bildelemente sei der Absolutbetrag des betreffenden Farbabstandsvektors $\Delta F$ verstanden, also

$$\Delta E = |\Delta F| = \{(L_i - L_r)^2 + (a_i - a_r)^2 + (b_i - b_r)^2\}^{0.5}$$

worin die Indices i und r wiederum die genannte Bedeutung haben.

Die Auswerteeinrichtung 5 berechnet für jedes Bildelement 4 des aktuellen Druckbogens 3 aus den an diesem ermittelten Farbvektoren $F_i$ und den am OK-Bogen 3 oder auf andere Weise ermittelten Soll-Farbvektoren $F_r$ den Farbabstandsvektor $\Delta F$. Aus den Farbvektoren $F_i F_r$ bzw. den Farbabstandsvektoren $\Delta F$ werden Farbmesswerte FMW gebildet, aus denen schliesslich die für die Druckmaschinensteuereinrichtung 9 erforderlichen Eingangsgrössen abgeleitet werden. Letzteres kann z.B. gemäss der Lehre der EP-B2-0 228 347 erfolgen.

Im Falle einer zonal ausgelegten Druckmaschine gelten die nachstehenden Ausführungen für Bildelemente 4 jeweils einer Druckzone und für alle Druckzonen gleichermassen.

Für die erfindungsgemässe Berechnung der Farbmesswerte FMW aus den Farbabstandsvektoren $\Delta F$ werden die Bildelemente 4 bzw. ihre Farbabstandsvektoren $\Delta F$ einem Gewichtungsprozess unterzogen, welcher den Einfluss der Flächendeckungen der beteiligten Druckfarben und von Positionierungsfehlern berücksichtigt.

Für eine nachfolgende Weiterverarbeitung der Farbmesswerte FMW zu den genannten Eingangsgrössen für die Farbregeleinrichtung 9 werden Bildelemente 4 mit relativ kleinen, unter einem ersten Schwellenwert liegenden Flächendeckungswerten weniger oder nicht berücksichtigt. Insbesondere sollten Bildelemente 4 mit Flächendeckungswerten unter 10% unberücksichtigt bleiben. Demzufolge wird ein erster, flächendeckungsabhängiger Gewichtsfaktor g1 wie folgt definiert:

g1 = 1 für Flächendeckungen >= 10% und g1 = 0 für Flächendeckungen < 10%

Da die Farbwerte L,a,b des Farbvektors F näherungsweise proportional zu den Flächendeckungen sind, wird der erste Gewichtsfaktor g1 worzugsweise anhand des Farbabstands ΔE des Bildelements 4 zu einer unbedruckten Stelle des Druckbogens 3 (Papierweiss) wie folgt definiert:

$$g1 = 1 \text{ für } \Delta E_p^2 >= 5^2 \text{ und } g1 = 0 \text{ für } \Delta E_p^2 < 5^2$$

Darin ist $\Delta E_p^2$ das Quadrat des Farbabstands des Bildelements 4 zur unbedruckten Stelle des Druckbogens (Papierweiss). Anstelle des Werts $5^2$ kann auch ein unterschiedlicher zweiter Schwellenwert eingesetzt werden.

Dem Einfluss von Positionierungsfehlern wird durch einen zweiten Gewichtsfaktor g2 Rechnung getragen. Es wird dabei davon ausgegangen, dass Bildelemente 4 in einer homogenen Umgebung relativ unempfindlich auf Positionierungsfehler sind. Unter homogener Umgebung wird verstanden, dass die Farbabstände des Bildelements 4 zu seinen 8 benachbarten Bildelementen 4 relativ gering sind und unter einem dritten Schwellenwert liegen. In diesem Fall wird der zweite Gewichtsfaktor auf g2 = 1 gesetzt. Mit zunehmenden Farbabständen wird der zweite Gewichtsfaktor reduziert. Der zweite Gewichtsfaktor g2 kann beispielsweise wie folgt bestimmt werden:

$$g2 = 1 \text{ für } \Delta E^M <= 8 \text{ und } g2 = (8/\Delta E^M) \text{ für } \Delta E^M > 8$$

Darin bedeutet $\Delta E^M$ die Summe der Farbabstände des Bildelements 4 zu seinen 8 benachbarten Bildelementen 4. Eine bevorzugte, weil rechnerisch weniger aufwendige, Definition des zweiten Gewichtsfaktors g2 ist durch die folgende Beziehung gegeben:

$$g2 = 1 \text{ für } \Delta E^{M2} <= 8^2 \text{ und } g2 = (8/\Delta E^{M2})^{0.5} \text{ für } \Delta E^{M2} > 8^2$$

Darin bedeutet $\Delta E^{M2}$ die Summe der Quadrate der Farbabstände des Bildelements 4 zu seinen 8 benachbarten Bildelementen 4.

Die beiden Gewichtsfaktoren g1 und g2 können zu einem für jedes Bildelement 4 individuellen kombinierten Gewichtsfaktor g gemäss g = g1*g2 kombiniert werden. Die Farbabstandsvektoren ΔF der einzelnen Bildelemente 4 werden nun jeweils durch Multiplikation mit den beiden Gewichtsfaktoren g1 und g2 oder vorzugsweise mit dem aus ihnen durch multiplikative Verknüpfung gebildeten kombinierten Gewichtsfaktor g gewichtet. Die so gewichteten Farbabstandsvektoren der einzelnen Bildelemente 4 bilden die Farbmesswerte FMW, welche für die Regelung der Farbgebungsorgane der Druckmaschine weiter ausgewertet werden können.

Gemäß einer Variante kann der Gewichtsfaktor g2 auch aus den Flächendeckungsdifferenzen zu den benachbarten Bildelementen 4 bestimmt werden, wobei die Farbabstände der Bildelemente 4 zu den benachbarten Bildelementen 4 unberücksichtigt bleiben können. Der Gewichtsfaktor g2 errechnet sich dann aus

$$g2 = 1/\{1+(\Delta Fd)^2\}$$

wobei mit $\Delta Fd$ das Maximum der Flächendeckungsdifferenzen eines Bildelementes 4 zu seinen 8 Nachbarn bezeichnet ist.

Gewünschtenfalls kann auch die Druckfarbe Schwarz in die Berechnung der Eingangsgrössen für die Druckmaschinensteuerung bzw. in die Berechnung der für diese Eingangsgrössen benötigten Farbmesswerte FMW mit einbezogen werden. In diesem Fall werden die Druckbögen 3 nicht nur im sichtbaren Spektralbereich (ca. 400 - 700 nm) ausgemessen, sondern auch an mindestens einer Stelle im nahen Infrarot, wo nur die Druckfarbe Schwarz eine nennenswerte Absorption aufweist. Die Remissionsspektren der einzelnen Bildelemente 4 umfassen dann also ausser den Remissionswerten im sichtbaren Spektralbereich zusätzlich noch mindestens einen Remissionswert im nahen Infrarot-Bereich. Der Remissionswert im nahen Infrarot wird in einen Infrarot-Wert I umgerechnet, der qualitativ dem Helligkeitswert L des

Dies erfolgt analog der Berechnungsformel für L nach der Beziehung

$$I = 116 \cdot 3\sqrt{\frac{Ii}{Iin}} - 16$$

worin $I_i$ die im betreffenden Bildelement 4 gemessene Infrarot-Remission und $I_{in}$ die an einer unbedruckten Stelle des Druckbogens 3 gemessene Infrarot-Remission bedeuten. Der Infrarot-Wert I kann daher wie der Helligkeitswert L nur Werte von 0-100 annehmen. Der Farbvektor F wird auf vier Dimensionen erweitert mit dem Infrarot-Wert I als vierte Komponente. Entsprechend sind auch die Farbabstandsvektoren $\Delta F$ und deren die Farbabstände $\Delta E$ bildenden Absolutbeträge vierdimensional. In den Berechnungsformeln für die Festlegung der Gewichtsfaktoren g1 und g2 ist dem Beitrag des Infrarot-Werts I durch entsprechende Anpassung der angegebenen Schwellenwerte Rechnung zu tragen.

**Patentansprüche**

1. Verfahren zur Gewinnung von für die Farbgebungsregelung einer Druckmaschine bestimmten Farbmesswerten aus einem von der Druckmaschine erzeugten Druckbild, bei dem das Druckbild (3) in einer Anzahl von Bildelementen (4) bezüglich eines ausgewählten Farbkoordinatensystems farbmetrisch ausgemessen wird, bei dem weiterhin aus den dabei gewonnenen Farbvektoren ($F_i$) für jedes Bildelement (4) Farbabstandsvektoren ($\Delta F$) zu auf dasselbe Farbkoordinatensystem bezogenen, vorgegebenen oder aus einem Referenz-Druckbogen (3) ermittelten Soll-Farbvektoren ($F_r$) berechnet werden, und bei dem diese Farbabstandsvektoren ($\Delta F$) als für die Farbgebungsregelung der Druckmaschine (1) bestimmte Farbmesswerte (FMW) verwendet werden, indem die Farbabstandsvektoren ($\Delta F$) mit zwei Gewichtfaktoren (gl, g2) multipliziert werden, wobei einer der Gewichtsfaktoren (g1) über die Flächendeckung und der andere (g2) über farbmetrische Größen bestimmt wird,
**dadurch gekennzeichnet,**
**dass** der aus den Flächendeckungen berechnete Gewichtsfaktor (g1) eines Bildelementes (4) einen Maximalwert erhält, wenn eine der Flächendeckungen des Bildelementes (4) einen vorgegebenen Schwellwert überschreitet und der aus den Flächendeckungen berechnete Gewichtsfaktor (g1) andernfalls einen kleineren Wert erhält.

2. Verfahren nach Anspruch 1,
**dadurch gekennzeichnet,**
**dass** der aus den Flächendeckungen berechnete Gewichtsfaktor (g1) einen Wert 1 erhält, wenn eine der Flächendeckungen den Wert 10% überschreitet, und dass der aus den Flächendeckungen berechnete Gewichtsfaktor (g1) andernfalls den Wert 0 erhält.

3. Verfahren nach Anspruch 1,
**dadurch gekennzeichnet,**
**dass** für jedes Bildelement (4) die Farbabstände zu seinen unmittelbar benachbarten Bildelementen (4) bestimmt werden, dass der über farbmetrische Größen bestimmte Gewichtsfaktor (g2) eines Bildelements (4) einen Maximalwert, insbesondere den Wert 1, erhält, wenn die Summe der Farbabstände einen vorgegebenen dritten Schwellenwert, insbesondere den Wert 8, erreicht oder unterschreitet, und dass der über farbmetrische Größen bestimmte Gewichtsfaktor (g2) andernfalls einen mit zunehmender Summe der Farbabstände gegen 0 gehenden kleineren Wert erhält.

4. Verfahren nach Anspruch 1,
**dadurch gekennzeichnet,**
**dass** zur Bestimmung des über farbmetrische Größen bestimmten Gewichtsfaktors (g2) der Flächendeckungsunterschied eines Bildelementes (4) zu seinen benachbarten Bildelementen (4) verwendet wird.

**Claims**

1. Method of obtaining colorimetric values, intended for controlling the inking of a printing machine, from a printed image produced by the printing machine, in which the printed image (3) is measured colorimetrically with regard to a selected colour coordinate system in a number of image elements (4) in which, furthermore, the colour vectors ($F_i$) obtained in the process for each image element (4) are used to calculate colour difference vectors ($\Delta F$) in relation to reference colour vectors ($F_r$) based on the same colour coordinate system and predefined or determined from a reference printed sheet (3), and in which these colour difference vectors ($\Delta F$) are used as colorimetric values (FMW) intended for controlling the inking of the printing machine (1), by the colour difference vectors ($\Delta F$) being multiplied by two weighting factors (g1, g2), one of the weighting factors (g1) being determined via the area coverage and the other (g2) via colorimetric variables, **characterized in that** the weighting factor (g1) of an image element (4) that is calculated from the area coverages is given a maximum value if one of the area coverages of the image element (4) exceeds a predefined threshold value, and the weighting factor (g1) calculated from the area coverages is otherwise given a smaller value.

**2.** Method according to Claim 1, **characterized in that** the weighting factor (g1) calculated from the area coverages is given a value 1 if one of the area coverages exceeds the value 10%, and **in that** the weighting factor (g1) calculated from the area coverages is otherwise given the value 0.

**3.** Method according to Claim 1, **characterized in that** for each image element (4) the colour differences from its immediately adjacent image elements (4) are determined, **in that** the weighting factor (g2) of an image element (4) that is determined via colorimetric variables is given a maximum value, in particular the value 1, if the sum of the colour differences reaches or falls below a predefined third threshold value, in particular the value 8, and **in that** the weighting factor (g2) determined via colorimetric variables is otherwise given a smaller value which approaches zero as the sum of the colour differences increases.

**4.** Method according to Claim 1, **characterized in that** in order to determine the weighting factor (g2) determined via colorimetric variables, the area coverage difference between an image element (4) and its adjacent image elements (4) is used.

**Revendications**

**1.** Procédé pour obtenir des valeurs de mesure colorimétrique déterminées, pour la régulation de l'encrage d'une presse à imprimer, à partir d'une image imprimée produite par la presse à imprimer, dans lequel, dans un certain nombre d'éléments d'image (4), l'image imprimée (3) est mesurée au point de vue colorimétrique par rapport à un système de coordonnées colorimétriques choisi, dans lequel en outre, à partir des vecteurs colorimétriques ($F_i$) ainsi obtenus, sont calculés, pour chaque élément d'image (4), des vecteurs d'écart colorimétrique ($\Delta F$) par rapport à des vecteurs colorimétriques prescrits ($F_r$) rapportés au même système de coordonnées colorimétriques ou établis à partir d'une feuille imprimée de référence (3) et dans lequel ces vecteurs d'écart colorimétrique ($\Delta F$) sont employés comme valeurs de mesure colorimétrique (FMW) déterminée pour la régulation de l'encrage de la presse à imprimer (1), par le moyen que les vecteurs d'écart colorimétrique ($\Delta F$) sont multipliés par deux facteurs de pondération (g1, g2), l'un des facteurs de pondération (g1) étant déterminé en fonction de la couverture de surface et l'autre (g2) en fonction de grandeurs colorimétriques,
oaractérisé par le fait,
que le facteur de pondération (g1), calculé à partir des couvertures de surface, d'un élément d'image (4) reçoit une valeur maximale lorsque l'une des couvertures de surface de l'élément d'image (4) dépasse, par valeur supérieure, une valeur de seuil prescrite et que par ailleurs le facteur de pondération (g1), calculé à partir des couvertures de surface, reçoit une valeur plus faible.

**2.** Procédé selon la revendication 1,
**caractérisé par le fait,**
**que** le facteur de pondération (g1), calculé à partir des couvertures de surface, reçoit la valeur 1 lorsque l'une des couvertures de surface dépasse, par valeur supérieure, la valeur 10 %,
et **que** le facteur de pondération (g1), calculé à partir des couvertures de surface, reçoit par ailleurs la valeur 0.

**3.** Procédé selon la revendication 1,
**caractérisé par le fait,**
**que** pour chaque élément d'image (4) les écarts colorimétriques sont déterminés par rapport à ses éléments d'image (4) immédiatement voisins, que le facteur de pondération (g2), déterminé en fonction de grandeurs colorimétriques, d'un élément d'image (4) reçoit une valeur maximale, en particulier la valeur 1, lorsque la somme des écarts colorimétriques atteint ou dépasse, par valeur inférieure, une troisième valeur de seuil prescrite, en particulier la valeur 8 et que le facteur de pondération (g2), déterminé en fonction de grandeurs colorimétriques, reçoit par ailleurs une valeur plus faible qui tend vers 0 pour une somme croissante des écarts colorimétriques.

**4.** Procédé selon la revendication 1,
**caractérisé par le fait,**
**que** pour déterminer le facteur de pondération (g2) déterminé en fonction de grandeurs colorimétriques, c'est la différente de couverture de surface entre un élément d'image (4) et ses éléments d'image voisins (4) qui est employée.